# EUROPEAN PATENT SPECIFICATION

(11) **EP 1 873 560 B1**
(45) Date of publication and mention of the grant of the patent: **01.08.2012**
(21) Application number: 07011682.7
(22) Date of filing: 14.06.2007
(51) Int. Cl.: G02B 3/14, G02B 26/02

(54) **Lens with adjustable focal length**
Linse mit einstellbarer Brennweite
Lentille à longueur focale réglable

(30) Priority: 26.06.2006 CN 200610090839
(43) Date of publication of application: 02.01.2008
(73) Proprietor: National Tsing Hua University, Hsinchu 30013 (TW)
(72) Inventor: Yeh, Jer-Liang, Taichung City (TW); Cheng, Chih-Cheng, Banciao City, Taipei County 220 (TW); Chang, Chia-Ming, Kaohsiung City, 800 (TW)
(74) Representative: Goddar, Heinz J.

(56) References cited:
- EP-A- 1 069 450
- EP-A2- 1 180 713
- WO-A-03/069380
- US-A- 4 030 813
- US-A1- 2003 006 140
- US-A1- 2003 183 525
- US-B2- 6 545 815
- CHIH-CHENG CHENG ET AL: "Variable focus dielectric liquid droplet lens" OPTICS EXPRESS OPT. SOC. AMERICA USA & THE INSTITUTION OF ELECTRICAL ENGINEERS, STEVENAGE, GB, [Online] vol. 14, no. 9, 1 May 2006 (2006-05-01), XP002454271 ISSN: 1094-4087 INSPEC, database accension no. 9323961 [retrieved on 2007-10-09]

## Description

### BACKGROUND OF THE INVENTION

### 1. Field of the invention

This invention is related to a lens used in an optical system and more particular, to a lens with an adjustable focal length.

### 2. Description of the prior art

Generally, focal length tuning lenses in optical systems can be categorized into two types: mechanical tuning lenses and electrical tuning lenses. In mechanical tuning lenses, the tuning function is achieved by a motor which movie lenses forward or backward; thus, a large volume and high power consumption are required for movable lenses.

In prior arts, an electrical tuning lens adjusts its focal length by deforming the profile of a liquid with electrowetting mechanisms. The liquids in an electrical tuning lens generally include a conductive liquid and an insulating liquid. The profile of the conductive liquid can be electrically changed by electrowetting mechanisms, so that a variable focal length of the lens is obtained.

The patent, US 6,545,815, discloses an adjustable liquid lens with the assistance of electrowetting mechanisms. FIG. 1 illustrates a liquid lens 10 proposed in this prior art. In this patent, a conductive liquid droplet 11 is disposed on an insulating layer 12 that also functions as a lubricating layer. A control electrode 15 is* located under the insulating layer 12. A droplet electrode 16 directly contacts with the conductive liquid droplet 11. The voltage difference between the control electrode 15 and the droplet electrode 16 induces electrowetting effect to deform the profile of the conductive liquid droplet 11. The focal length of the liquid lens 10 is adjusted while the profile of the conductive liquid droplet 11 is electrically deformed.

Lenses utilizing electrowetting mechanisms in prior arts have disadvantages due to the fact that the conductive liquid is made of electrolyte. For instance, the conductive liquid droplet 11 contacts directly with the droplet electrode 16 that induces high electric currents. Electrolysis occurs in the conductive liquid droplet 11 due to the electric currents, In addition, the conductive liquid droplet 11 is heated due to the electric fields provided by the voltage difference. This effect is named as Joule heating.

### SUMMARY OF THE INVENTION

To solve the aforementioned problems, this invention provides a lens with an adjustable focal length using dielectric forces instead of electrowetting mechanisms. Dielectric forces are generated under external electric fields due to the difference of the dielectric constants between two non-conductive media (e.g. liquid, gas, and solid). Distinct to the conductive liquid used in the electrowetting method, the liquids used in the dielectric force method are non-conductive.

One example is a lens including a non-conductive liquid droplet. The non-conductive liquid droplet is placed on a bottom plate that includes a set of first electrodes. The set of first electrodes is disposed in such a way that the set of first electrodes are capable of being selectively biased to respectively create a first voltage potential difference between the liquid droplet and each of the set of first electrodes. The dielectric constants of the liquid droplet and the medium surrounding the droplet (e.g. air or other liquids) are different. Dielectric forces are induced by the difference of the dielectric constants while the first voltage potential differences are applied. The profile of the non-conductive liquid droplet is deformed by the dielectric forces and thereby causes a change of the focal length of the lens.

The embodiment, according to this invention, is a lens including a chamber and a set of electrodes. The chamber is filled with a first liquid and a droplet of a second liquid. The first liquid and the second liquid are immiscible to each other. Both of the liquids are non-conductive, and their dielectric constants are different. The interface between the first liquid and the droplet of the second liquid (i.e. surface profile of the liquid droplet) is deformable by electric fields provided by the set of electrodes. The focal length of the lens is accordingly adjustable by deforming the interface.

### BRIEF DESCRIPTION OF THE APPENDED DRAWINGS

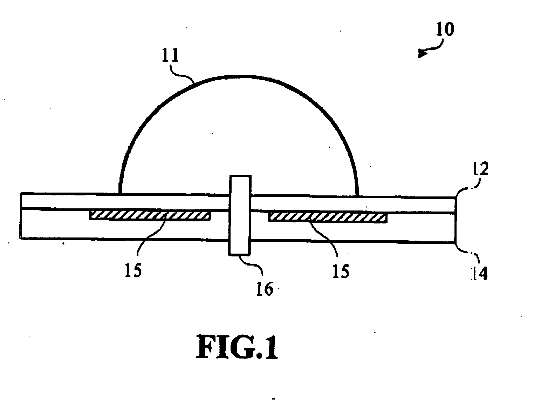

FIG. 1 illustrates a liquid lens adjusted by electrowetting effects.
FIG. 2(A) illustrates a lens in a first example.
FIG. 2(B) shows how the first example further includes a lubricating layer.
FIG. 2(C) shows how the first example further includes an upper plate.
FIG. 3 illustrates a lens in a second example.
FIG. 4 illustrates a lens in the embodiment according to this invention.
FIG. 5 shows several possible disposition forms of electrodes.

### DETAILED DESCRIPTION OF THE INVENTION

One main purpose of this invention is to provide a lens with an adjustable focal length.

Each medium (e.g. liquid) has specific dielectric properties, particularly a specific dielectric constant. One dielectric constant consists of a real part and an imaginary part. The real part and the imaginary part represent polarizability and the conductivity of the liquid, respectively. The polarizability indicates flow well molecules in the medium are polarized under electric fields. In a cas of two immiscible liquids with different real parts of the dielectric constants, the dielectric forces are induced on the interface of the two liquids while electric fields pass through the interface. The dielectric forces result from the gradient of the electric energy εε₀E² where ε is the real part of the dielectric constant, and E is the electric field strength on the interface of the two liquids. Hence, the difference of the real part of dielectric constants between the two liquids induces the dielectric forces. Non-conductive liquid in this invention can be theoretically defined as σ/00εε₀)<1, where σ is conductivity, ω is angular frequency, and ε₀ is permittivity of free space (vacuum).

In this invention, dielectric forces are utilized to control the shape of a liquid droplet; thus, the focal length of a lens is adjustable. According to this invention, the liquid droplet can be liquid crystal, ether ketone, alcohol, or any organic material capable of being polarized by an electric field. The liquid droplet does not have to be conductive. Besides, electrodes for generating electric fields are not required to directly contact with the liquids in this invention. Many disadvantages in prior arts are avoided accordingly.

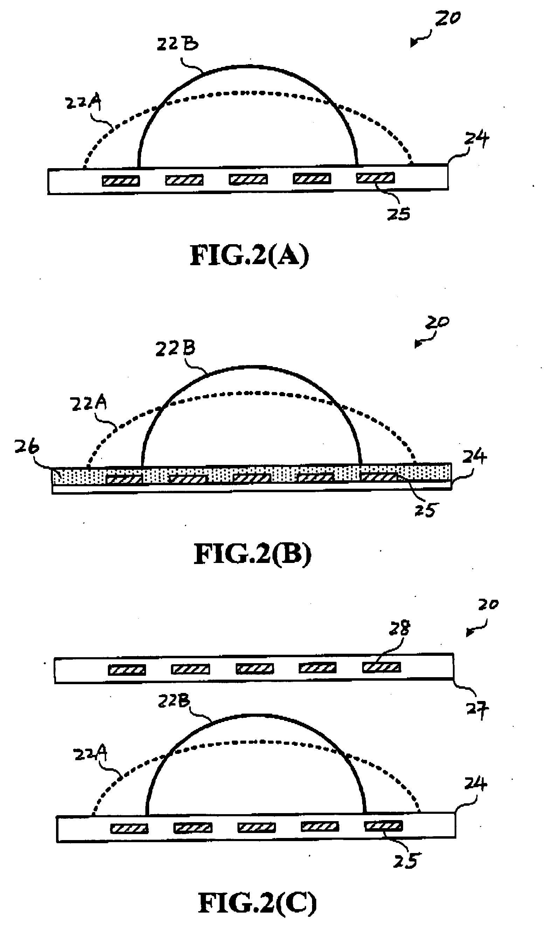

Referring to FIG. 2(A), it illustrates a lens in a first example . The lens 20 includes a non-conductive liquid droplet (22A and 22B) and a bottom plate 24. The curves 22A and 22B represents the profile of the droplet without and with the influence of electric fields, respectively. The bottom plate 24 includes a set of first electrodes 25. The bottom plate 24 is used to place the liquid droplet. The set of first electrodes 25 is disposed in such a way that the set of first electrodes 25 can be selectively biased to respectively create a first voltage potential difference between the liquid droplet and each of the set of first electrodes. The profile of the non-conductive liquid droplet is deformed by dielectric forces and accordingly causes a change in the focal length of the lens. That is to say, the focal length of the lens can be adjusted through controlling the distribution of the electric fields.

To improve the tuning effect of the focal length by dielectric forces, the bottom plate 24 can be further coated with a lubricating layer 26 as shown in FIG. 2(B). The lubricating layer 26 is disposed between the liquid droplet and the se of first electrodes 25. The lubricating layer 26 can be Teflon, polydimethyl siloxane (PDMS), thick film photo-resist, parylene, silicon oxide, or any hydrophobic material. The lubricating layer 26 is used to reduce the friction between the droplet and the bottom plate 24.

FIG. 2(C) illustrates another modification of the lens shown in FIG. 2(A). In addition, the lens 20 includes an upper plate 27. The upper plate 27 include a set of second electrodes 28 disposed in such a way that the set of second electrodes 28 may be selectively biased to respectively create a second voltage potential difference between the liquid droplet and each of the set of second electrodes 28. The profile of the liquid droplet is deformed by dielectric forces and accordingly causes a change in the focal length of the lens. Dielectric forces are induced by the difference of the real parts of the dielectric constants while electric fields are applied. The strength of the electric fields is controlled by the difference of voltage potentials between the set of second electrodes 28 and the set of first electrodes 25. The profile of the non-conductive liquid droplet is adjusted electrically by the applied voltages.

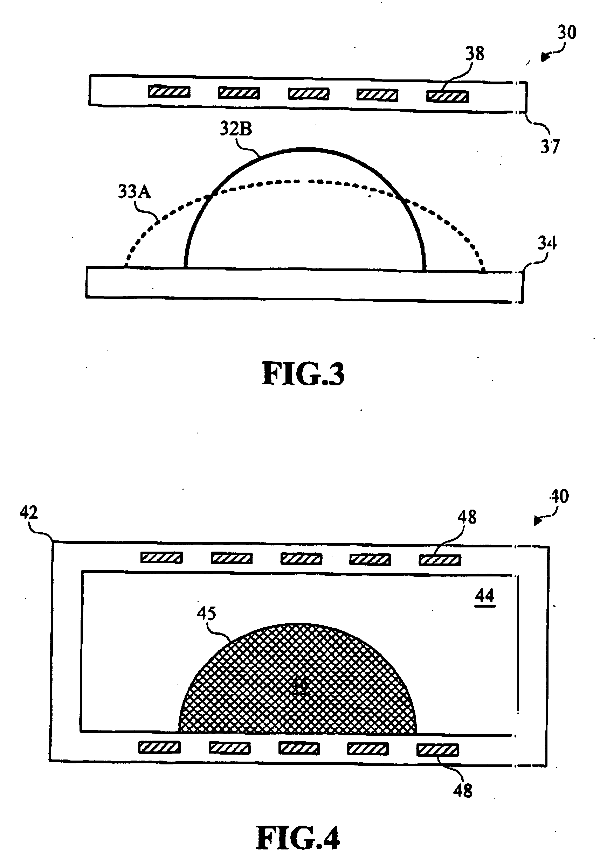

Referring to FIG. 3, it illustrates a lens in a second example. The lens 30 includes a droplet (32A and 32B), a bottom plate 34, and an upper plate 37. The curves 32A and 32B represents the profile of the droplet without and with the influence of electric fields, respectively. The main difference between the second and first embodiments is that the bottom plate 34 is only used for placing the liquid droplet. In this example, the electric fields are provided by the electrodes 38 at the upper plate 37.

Referring to FIG. 4, it illustrates a lens 40 in the embodiment according to this invention. The lens 40 includes a chamber 42, a first liquid 44, and a droplet of a second liquid 46. The first liquid 44 and the droplet of the second liquid 46 are both disposed in the chamber 42.

The first liquid 44 and the droplet of the second liquid 46 are non-conductive liquids. The first liquid 44 has a first dielectric constant; the droplet of the second liquid 46 has a second dielectric constant. The first and the second dielectric constants are unequal. In this embodiment, the first liquid 44 and the second liquid 46 are immiscible to each other. Hence, an interface 45 between the first liquid 44 and the droplet of the second liquid 46 is formed.

The lens 40 includes a set of third electrodes 48. The set of third electrodes 48 is disposed in such a way that the set of third electrodes 48 may be selectively biased to generate electric fields passing through the interface 45. By changing the electric fields, the interface 45 can be deformed by dielectric forces. In this way, the profile of the interface 45 can be adjusted and the focal length of the lens is accordingly adjustable.

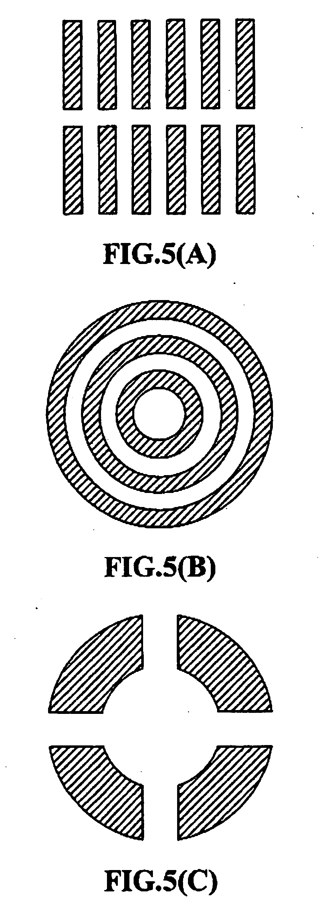

Referring to FIG. 5, it shows several possibilities of disposition form 3 of the electrodes. In actual applications, the first electrodes 25, the second electrodes 28, and the third electrodes 48 can be disposed in the form of a matrix as shown in FIG. 5(A), a concentric circle as shown in FIG. 5(B), or a circle as shown in FIG. 5(C). The third electrodes 48 can also be disposed in parallel, as shown in FIG. 4 As long as the effect of controlling the profile of the liquid droplet can be achieved, other disposition forms of the electrodes can be applied in the embodiment of this invention.

The lenses with adjustable focal lengths according to this invention provide an effective tuning method. Because the electrodes in this invention do not directly contact the liquid droplet, the electric current in this invention is potentially lower than that of prior arts. Furthermore, this invention avoids the problems of Joule heating and electrolysis in prior arts.

## Claims

1. A lens device (40) comprising:
a chamber (42) filled with a first liquid (44) and a droplet of a second liquid (46) both of the first liquid and the second liquid being non-conductive, the first liquid and the second liquid being immiscible to each other, the first liquid and the second liquid having different dielectric constants; and
a set of electrodes (48) for generating an electric field, an interface (45) between the first liquid and the droplet of the second liquid being controlled by a dielectric force induced from the electric field such that a focal length of the lens device is adjustable.

2. The lens device of claim 1, said lens device further comprising:
a lubricating layer disposed between the first liquid, the droplet of the second liquid, and the set of electrodes.

3. The lens device of claim 2, wherein the lubricating layer comprises at least one of the following: Teflon, polydimethyl siloxane (PDMS), thick film photo-resist, parylene, silicon oxide, or an insulating material.

4. The lens device of claim 1, wherein the first liquid comprises at least one of the following: liquid crystal, ether, ketone, alcohol, and an organic material capable of being polarized by an electric field.

5. The lens device of claim 1, wherein the set of electrodes are disposed in the form of a circle, a matrix, or a concentric circle.

## Patentansprüche

1. Linsenvorrichtung (49), umfassend
eine Kammer (42), die mit einer ersten Flüssigkeit (44) und einem Tropfen einer zweiten Flüssigkeit (46) gefüllt ist, wobei sowohl die erste Flüssigkeit als auch die zweite Flüssigkeit nicht leitend sind, und wobei die erste Flüssigkeit und die zweite Flüssigkeit nicht miteinander mischbar sind, wobei die erste Flüssigkeit und die zweite Flüssigkeit unterschiedliche Dielektrizitätskonstanten aufweisen; und
einen Satz Elektroden (48) zum Erzeugen eines elektrischen Felds, wobei eine Grenzfläche (45) zwischen der ersten Flüssigkeit und dem Tropfen der zweiten Flüssigkeit durch eine Dielektrizitätskraft gesteuert wird, die durch das elektrische Feld erzeugt wird, so dass die Brennweite der Linsenvorrichtung einstellbar ist.

2. Linsenvorrichtung nach Anspruch 1, **dadurch gekennzeichnet, dass** die Linsenvorrichtung weiter umfasst:
eine Schmierschicht, die zwischen der ersten Flüssigkeit, dem Tropfen der zweiten Flüssigkeit und dem Satz Elektroden angeordnet ist.

3. Linsenvorrichtung nach Anspruch 2, **dadurch gekennzeichnet, dass** die Schmierschicht zumindest einen der folgenden Stoffe enthält: Teflon, Polydimethylsiloxan (PDMS), Dickfilmfotowiderstand, Parylen, Siliziumoxid oder ein isolierendes Material.

4. Linsenvorrichtung nach Anspruch 1, **dadurch gekennzeichnet, dass** die erste Flüssigkeit zumindest einen der folgenden Stoffe enthält: Flüssigkristalle, Äther, Keton, Alkohol und ein organisches Material, das durch ein elektrisches Feld polarisiert werden kann.

5. Linsenvorrichtung nach Anspruch 1, **dadurch gekennzeichnet, dass** der Satz Elektroden in Form eines Kreises, einer Matrix oder eines konzentrischen Kreises angeordnet ist.

## Revendications

1. Dispositif de lentille (40) comportant :
une chambre (42) remplie d'un premier liquide (44) et d'une gouttelette d'un second liquide (46) ; les deux parmi le premier liquide et le second liquide étant non conducteurs, le premier liquide et le second liquide étant immiscibles l'un par rapport à l'autre, le premier liquide et le second liquide ayant différentes constantes diélectriques ; et
un ensemble d'électrodes (48) pour générer un champ électrique, une interface (45) entre le premier liquide et la gouttelette du second liquide étant commandée par une force diélectrique induite en provenance du champ électrique de sorte qu'une longueur focale du dispositif de lentille est réglable.

2. Dispositif de lentille selon la revendication 1, ledit dispositif de lentille comportant par ailleurs :
une couche lubrifiante disposée entre le premier liquide, la gouttelette du second liquide et l'ensemble d'électrodes.

3. Dispositif de lentille selon la revendication 2, dans lequel la couche lubrifiante comporte au moins l'un parmi les suivants : téflon, polydiméthylsiloxane (PDMS), photorésistant à couche épaisse, parylène, oxyde de silicium, ou un matériau isolant.

4. Dispositif de lentille selon la revendication 1, dans lequel le premier liquide comporte au moins l'un parmi les suivants : cristal liquide, éther, cétone, alcool, et un matériau organique en mesure d'être polarisé par un champ électrique.

5. Dispositif de lentille selon la revendication 1, dans lequel les électrodes de l'ensemble d'électrodes sont disposées sous la forme d'un cercle, d'une matrice, ou d'un cercle concentrique.
